# EUROPEAN PATENT APPLICATION

(11) **EP 0 917 142 A1**
(43) Date of publication of application: **19.05.1999**
(21) Application number: 97119672.0
(22) Date of filing: 11.11.1997
(51) Int. Cl.: G11B 20/10

(54) **Method and apparatus for controlling the buffering of a data stream**

(71) Applicant: DEUTSCHE THOMSON-BRANDT GMBH, 78048 Villingen-Schwenningen (DE)
(72) Inventor: Ostermann, Ralf, 30451 Hannover (DE)
(74) Representative: Hartnack, Wolfgang, Dipl.-Ing.

(57) **Abstract**

In a DVD player the disc rotates at a constant speed. This automatically implies a bitstream delivery at a basically constant bitrate. At the same time the DVD standard uses variable bitrate compression for video and audio signals which is carried out in respective data decoders. For data rate equalisation a track buffer is used. In order to make maximum use of the available buffer the functional equivalent to the track buffer is distributed across several stages of buffers which are in particular software controlled. A first stage is the a pickup buffer, a second stage is a parallel set of PES queue buffers which store e.g. the video, audio, sub-picture and/or highlight data streams. A third stage is a parallel set of bit buffers for the different data type decoders.

## Description

The present invention relates to a method and to an apparatus for controlling the buffering of a data stream including one or more types of data sectors.

### Background

A DVD (digital versatile disc) player is a disc based device where the disc rotates at a constant speed. This automatically implies a bitstream delivery at a basically constant bitrate. At the same time the DVD standard uses variable bitrate compression for video and audio signals which is carried out in respective data decoders. This allows superior picture and sound quality over constant bitrate coding. In order to basically match the variable compression bitrate and the disc read-out bitrate the DVD system can make use of a variable disc read-out bitrate. This can be carried out by still reading the disc data at a constant speed but by interrupting the reading for appropriate time periods.

### Invention

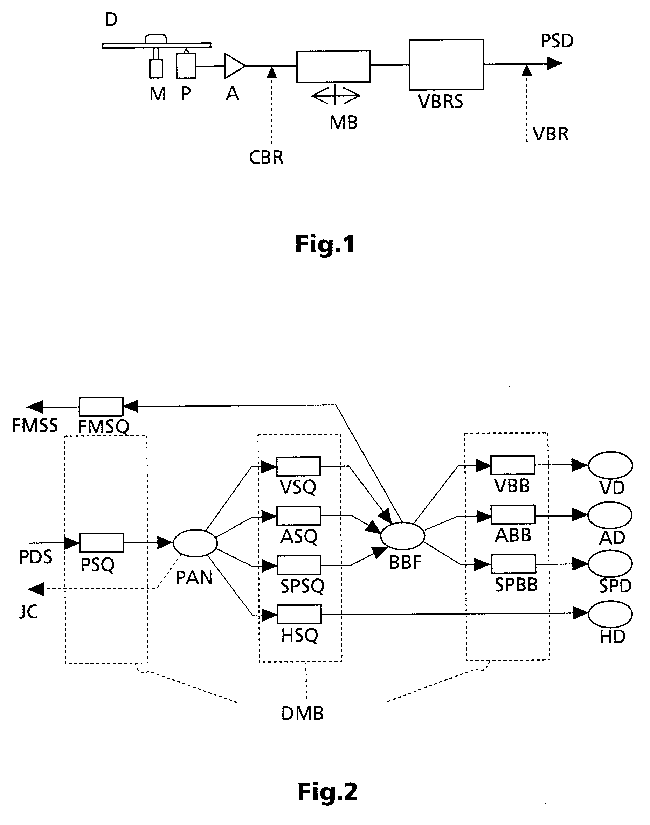

To cope with such requirements an elastic buffer called track buffer or mechanical buffer MB is implemented in a DVD player, see Fig. 1. Whenever the track buffer MB becomes full the read head of the pickup is moved back by the pickup control P by one or two or more tracks on the disc D to reread the data starting from the position where the track buffer became full or before such position. The disc is driven by a motor M. A constant bitrate CBR depending on the disc speed is fed, following amplification A and error correction, to the input of MB, the output signal of which is controlled by a variable bitrate scheduler VBRS which delivers the required data in the required format and at the required time in form of at least one variable bitrate VBR data stream to a data decoder or data decoders, respectively. VBR is defined by the program stream encoder in the studio where the disc has been mastered using corresponding data encoding.
During the time needed to perform the jump-back operation the data decoders or program stream decoders PSD, respectively, will most likely consume data from the track buffer MB. The storage capacity of this track buffer must be big enough to supply all the decoders with the worst case amount of data during the worst case jump-back time. The memory required for such track buffer is one of the most critical and scarce resources in a DVD player. The design, in particular the software design, must use every possibility to optimise this resource.

It is one object of the invention to disclose an improved method for track buffering. This object is achieved by the method disclosed in claim 1.

It is a further object of the invention to disclose an apparatus which utilises the inventive method. This object is achieved by the apparatus disclosed in claim 7.

In order to make maximum use of the available buffer or available buffers and to optimise the overall system throughput the functional equivalent to the track buffer MB is distributed across several stages of buffers which are in particular software controlled.
A first stage can be a pickup buffer which stores the complete pickup data stream.
A second stage can be a parallel set of PES (packetised elementary stream) queue buffers which store e.g. the video, audio, sub-picture and/or highlight data streams as parts of the complete pickup data stream.
A third stage can be a parallel set of bit buffers for e.g. the video, audio, sub-picture and/or highlight data decoders.

This architecture is different from known DVD 'mechanical buffer' architectures which arrange a data stream demultiplexer after the output of the track buffer, wherein the track buffer only serves for data rate equalisation.

The inventive architecture offers the following advantages:
a) The jump information which is located in so-called DSI packs, can be analysed and processed directly when the pack enters the track buffer. This results in faster pickup head jump behaviour.
b) It is not necessary to introduce an extremely tight coupling of a data stream demultiplexer to the variable bitrate byte delivery schedule as it is defined for MPEG-2 program streams. Thus, the storage capacity of the mechanical buffer can at the same time be used to deal with shortages in CPU power.
c) The processing time for demultiplexing can be prolonged significantly and makes software implementation of the demultiplexer easier.
d) Data sectors (a data sector is a specific data packet format for the DVD system) which need not to be decoded, e.g. multi-language audio data in case of single language decoding, can be removed from the data stream before passing subsequent stages of the mechanical buffer.
e) Those parts of the bitbuffers for the compressed data decoders that currently need not to be allocated for data decoding can be used instead for the mechanical buffering. This specific bitbuffer use does not decrease the required worst case mechanical buffer size, but it supports mechanical buffering in most typical playback scenarios.

In principle, the inventive method is suited for controlling the buffering of a data stream having a current first data rate and including one or more types of data sectors, for the purpose of decoding data of the data stream requiring a current second buffer-out data rate which is normally different from said first data rate, using the following steps:
- intermediate storing of data of the data stream with said first data rate in a first buffer stage;
- analysing data sectors of said data stream and assigning data sectors of specific type to corresponding parts of a subsequent second buffer stage;
- feeding with said second data rate data of respective types of data sectors to corresponding data decoding bitbuffers in a subsequent third buffer stage in order to control the presentation of the decoded data, wherein said first, second, and third buffer stages commonly carry out the buffering between said first and second data rates.

Advantageous additional embodiments of the inventive method are disclosed in the respective dependent claims.

In principle the inventive apparatus controls the buffering of a data stream having a current first data rate and including one or more types of data sectors, for the purpose of decoding data of the data stream requiring a current second buffer-out data rate which is normally different from said first data rate, and includes:
- means for intermediate storing data of the data stream with said first data rate in a first buffer stage;
- means for analysing data sectors of said data stream and assigning data sectors of specific type to corresponding parts of a subsequent second buffer stage;
- means for feeding with said second data rate data of respective types of data sectors to corresponding data decoding bitbuffers in a subsequent third buffer stage in order to control the presentation of the decoded data, wherein said first, second, and third buffer stages commonly carry out the buffering between said first and second data rates.

Advantageous additional embodiments of the inventive apparatus are disclosed in the respective dependent claims.

### Drawings

Embodiments of the invention are described with reference to the accompanying drawings, which show in:
- Fig. 1: conventional mechanical buffer architecture for a DVD player;
- Fig. 2: inventive embodiment of the mechanical buffer.

### Embodiments of the invention

In Fig. 2 the incoming pickup data stream PDS is first stored in a pickup buffer PSQ for PDS data sectors. A subsequent demultiplexer or pack analyser PAN determines and selects the data sectors for e.g. video, audio, sub-picture and/or highlight data and assigns respective data sectors to PES queue buffers, e.g. a video sector buffer VSQ, an audio sector buffer ASQ, a subpicture sector buffer SPSQ and/or a highlight sector buffer HSQ. This assignment can be carried out using respective address pointers or by a respective copy operation. Preferably the demultiplexer or pack analyser PAN determines when the pickup buffer PSQ is full or near to full and sends a corresponding jump command JC to the pickup control.
The data from the PES queue buffers pass through a decoder driver or bitbuffer feeder BBF or a corresponding number of bitbuffer feeders to corresponding data decoder bitbuffers, e.g. a video bitbuffer VBB, an audio bitbuffer ABB and/or a subpicture bitbuffer SPBB. This data assignment can be carried out by a physical copy operation. The decoder driver or bitbuffer feeder BBF can signal via a free memory sector signal buffer FMSQ a corresponding free memory sector signal FMSS to the pickup control. Data from the data decoder bitbuffers are fed to corresponding data decoders, e.g. a video decoder VD, an audio decoder AD and/or a subpicture decoder SPD. The audio decoder may be a MPEG audio and/or an AC3 audio decoder. Highlight data sectors may pass directly from highlight sector buffer HSQ to a highlight decoder HD.
The pickup buffer PSQ, the PES queue buffers, and/or the data decoder bitbuffers can make use of one single memory, corresponding storage areas or ranges of which are assigned to above buffer functions.

Preferably, the DVD demultiplexer is entirely based on software modules. This software is used to parse a stream of DVD sectors containing MPEG-2 program stream packs, to deliver the payload to the various decoders, and to control the presentation of the payload.
The pack analyser request is responsible for the actual demultiplexing operation. It takes DVD sectors containing MPEG-2 program stream packs from pickup buffer PSQ. These program stream packs are parsed to determine one of the PES buffer queues. There is one PES buffer queue for each data decoder. After the pack analyser has determined the correct PES buffer queue the DVD data sector is queued into that queue.
Preferably, this queuing operation does not involve any physical copy operation, it just passes pointers.
The decoder driver or bitbuffer feeder BBF may consist of various data decoder feeders, e.g. a video feeder, an MPEG audio feeder, an AC3 audio feeder, which take the DVD data sectors from their respective PES buffer queue and subsequently copy the data into the decoder bitbuffers. Normally it is necessary to perform a physical copy operation here, because the decoders chips that are available today, e.g. SGS-Thomson STi3520A, require a contiguous bitbuffer memory segment which is entirely controlled by the decoder hardware itself.

However, such additional copy operation can be avoided if an interlinked list being attached to smaller data portions, e.g. data sectors of 2048Byte, is used from which the decoder hardware evaluates respective jump addresses or address pointers for a common memory, as mentioned above. This procedure is described in more detail in an European patent application of the applicant having the internal reference number PD970061 and having been filed on the same day.
The data distribution in all stages is variable. Because data is not copied between stages and only address pointers to data blocks are passed, the distribution changes continuously.

In order to avoid any CPU availability problems it is preferable to carry out all processing steps which can be performed up to a current time instance. Therefore, the ideal goal is to have all decoder bitbuffers full and to empty all other queues.

The invention can be used in reproduction devices for all kind of storage media, in particular for optical or magnetical storage media like e.g. optical discs and magnetic tapes, but also for transmission of data to be decoded, if the current or short-term transmission data rate is different from the current or short-term decoding data rate.

## Claims

1. Method for controlling the buffering (MB, DMB) of a data stream (CBR) having a current first data rate and including one or more types of data sectors, for the purpose of decoding (VD, AD, SPD, HD) data of the data stream requiring a current second buffer-out data rate (VBR) which is normally different from said first data rate, **characterised** by the following steps:
- intermediate storing (PSQ) of data of the data stream with said first data rate in a first buffer stage;
- analysing (PAN) data sectors of said data stream and assigning data sectors of specific type to corresponding parts (VSQ, ASQ, SPSQ, HSQ) of a subsequent second buffer stage;
- feeding (BBF) with said second data rate data of respective types of data sectors to corresponding data decoding bitbuffers (VBB, ABB, SPBB) in a subsequent third buffer stage in order to control the presentation of the decoded data,
wherein said first, second, and third buffer stages commonly carry out the buffering (DMB) between said first and second data rates.

2. Method according to claim 1, wherein said first, second, and third buffer stages are located in a common memory.

3. Method according to claim 1 or 2, wherein the assignment in said second buffer stage is carried out using address pointers.

4. Method according to any of claims 1 to 3, wherein the feeding to said third buffer stage is carried out using a data copy operation.

5. Method according to any of claims 1 to 4, wherein said data stream (CBR) is a DVD data stream coming from an optical disc pickup and wherein said types of data sectors include video, audio, subpicture and/or highlight data sectors.

6. Method according to any of claims 1 to 5, wherein the data rates difference buffering for said first, second, and third buffer stages is controlled by software.

7. Apparatus for controlling the buffering (MB, DMB) of a data stream (CBR) having a current first data rate and including one or more types of data sectors, for the purpose of decoding (VD, AD, SPD, HD) data of the data stream requiring a current second buffer-out data rate (VBR) which is normally different from said first data rate, and including:
- means (PSQ) for intermediate storing data of the data stream with said first data rate in a first buffer stage;
- means (PAN) for analysing data sectors of said data stream and assigning data sectors of specific type to corresponding parts (VSQ, ASQ, SPSQ, HSQ) of a subsequent second buffer stage;
- means (BBF) for feeding with said second data rate data of respective types of data sectors to corresponding data decoding bitbuffers (VBB, ABB, SPBB) in a subsequent third buffer stage in order to control the presentation of the decoded data,
wherein said first, second, and third buffer stages commonly carry out the buffering (DMB) between said first and second data rates.

8. Apparatus according to claim 7, including a common memory in which said first, second, and third buffer stages are located.

9. Apparatus according to claim 7 or 8, wherein said data stream (CBR) is a DVD data stream coming from an optical disc pickup and wherein said types of data sectors include video, audio, subpicture and/or highlight data sectors

10. Apparatus according to claim 9, wherein said means (PAN) for analysing data sectors determine when the storage capacity of said means (PSQ) for intermediate storing data of the data stream with said first data rate in a first buffer stage is full or near to full and send a jump command (JC) to the pickup control (P).

11. Apparatus according to claim 9 or 10, wherein said means (BBF) for feeding with said second data rate data of respective types of data sectors to corresponding data decoding bitbuffers (VBB, ABB, SPBB) determine when free memory is available and send a corresponding free memory sector signal (FMSS) for the pickup control (P).
